# EUROPÄISCHE PATENTSCHRIFT

(11) **EP 0 316 602 B1**
(45) Veröffentlichungstag und Bekanntmachung des Hinweises auf die Patenterteilung: **16.06.1993**
(21) Anmeldenummer: 88117433.8
(22) Anmeldetag: 19.10.1988
(51) Int. Cl.: B27K 3/52, B27K 3/50

(54) **Holzschutzmittel**
Wood-protecting agent
Agent protecteur du bois

(30) Priorität: 27.10.1987 DE 3736298
(43) Veröffentlichungstag der Anmeldung: 24.05.1989
(60) Teilanmeldung: 91115260.1
(73) Patentinhaber: Dr. Wolman GmbH, D-76545 Sinzheim (DE)
(72) Erfinder: Goettsche, Reimer, Dr., D-7570 Baden-Baden 19 (DE); Borck, Hans-Volker, D-7570 Baden-Baden (DE); Marx, Hans-Norbert, D-7580 Buehl-Vimbuch (DE)
(74) Vertreter: Schweiss, Werner, Dr.

(56) Entgegenhaltungen:
- EP-A- 0 147 976
- EP-A- 0 189 844
- EP-A- 0 234 462
- DE-A- 3 138 575
- DE-A- 3 507 420
- DE-A- 3 613 254

## Beschreibung

Die vorliegende Erfindung betrifft wasserlösliche Holzschutzmittel für den Schutz von Holz, insbesondere von frischem Holz, z.B. frisch geschnittenem Schnittholz im Sägewerk oder frisch gefälltem Stammholz im Wald.

Es ist bekannt, Dimethylalkylamine, 2-(Methoxycarbonylamino)benzimidazol (BCM) oder N-Tridecyl-2,6-dimethylmorpholin (Tridemorph), z.B. in Form ihrer Salze, beispielsweise mit Fluoroborsäure, für den Holzschutz zu verwenden (EP-147 976, EP-234 462, DE-3 138 575.3, DE-3 507 420.5). Ihre Wirkungen befriedigen jedoch nicht.

Es wurde gefunden, daß Holzschutzmittel, die a) 5 bis 75% (Gew.Prozent) eines Dimethylalkylamins, b) 2,5 bis 50% einer wasserlöslichen Säure und c) 5 bis 25% einer wasserunlöslichen Säure enthalten, eine sehr gute Wirkung gegen Holzschädlinge, insbesondere Pilze, haben, die besser ist als die Wirkung der bekannten Holzschutzmittel. Die neuen Holzschutzmittel sind wasserlöslich. Sie werden in Form wäßriger Imprägnierlösungen verwendet, die durch Verdünnen mit Wasser aus den Holzschutzmitteln (Konzentraten) hergestellt werden. Die vorliegende Erfindung umfaßt sowohl die Konzentrate als auch die daraus durch Verdünnen mit Wasser erhältlichen verdünnten wäßrigen Lösungen (Imprägnierlösungen). Die neuen Holzschutzmittel eigenen sich zum Schutz von Holz, insbesondere frischem Holz, wie es beispielsweise als frisch geschnittenes Holz im Sägewerk oder als frisch gefälltes Stammholz im Wald anfällt.

Ein Dimethylalkylamin ist ein N,N-Dimethyl-N-alkylamin, dessen Alkylrest beispielsweise 6 bis 20 C-Atome enthält. Bevorzugt werden Dimethylalkylamine mit 12 bis 14 C-Atomen im Alkylrest. Neben den reinen Dimethylalkylaminen können auch Mischungen, z.B. Mischungen aus Dimethyl-C₁₂-alkylamin und Dimethyl-C₁₄-alkylamin (Dimethylalkyl (C₁₂/C₁₄-amin), verwendet werden.

Eine wasserlösliche Säure ist beispielsweise eine wasserlösliche anorganische Säure, z.B. eine Säure des Phosphors, insbesondere Phosphonsäure (H₃PO₃), Phosphinsäure (H₃PO₂), saure Phosphorsäureester (z.B. Phosphorsäure-mono-(oder -di-)alkylester, beispielsweise Phosphorsäuremonobutylester, Phosphorsäure-di-butylester), Phosphonsäure-mono-alkylester oder eine Saure des Schwefels, z.B. eine Sulfonsäure, beispielsweise Benzolmono-(oder -di)-sulfonsäure, Sulfaminsäure, 4-Phenolsulfonsäure. Ferner eine organische C₂-C₄-Carbonsäure, z.B. Monocarbonsäure, beispielsweise Essigsäure, Propionsäure, Methoxyessigsäure, Milchsäure, Glykolsäure oder Polycarbonsäuren, z.B. Fumarsäure, Citronensäure, Maleinsäure.

Eine wasserunlösliche Säure ist z.B. eine aliphatische C₅-C₂₀-Carbonsäure, beispielsweise eine Monocarbonsäure, Hexansäure, Heptansäure, Octansäure, Nonansäure, Decansäure, 2-Ethylpentansäure, 2-Ethylhexansäure, 2-Ethylheptansäure, Isooctansäure, Isononansäure, Versaticsäuren (stark verzweigte Monocarbonsäuren), oder eine Dicarbonsäure, z.B. Decandicarbonsäure.

Die Säuren können auch in Form ihrer Salze, z.B. Dimethylalkylaminsalze verwendet werden.

Die Holzschutzmittel sind wassermischbar, bilden mit Wasser klare Lösungen und besitzen in der üblichen Anwendungskonzentration (0,5 bis 10,0 Gew.%, berechnet auf das Konzentrat) einen pH-Wert von unter 7,0 bei ausschließlicher Verwendung von Dimethylalkylamin, bei Mischungen von Dimethylalkylamin mit Tridemorph einen pH-Wert von unter 6. Sie werden hergestellt durch Mischung der einzelnen Komponenten miteinander.

Die Holzschutzmittel (Konzentrate) sind mehr oder weniger viskose Lösungen, deren Viskosität durch Zugabe von polaren Lösungsmitteln herabgesetzt werden kann. Als polare Lösungsmittel können z.B. Dimethylformamid, Diethylformamid, N-Methylpyrrolidon, Dimethylsulfoxid, Glykole, Polyglykole, Glykolether, Glykoletheracetate, Alkohole verwendet werden.

Die Konzentrate enthalten im allgemeinen (Gewichtsprozente)
5,0 bis 75,0 %, insbesondere 30 bis 50 % Dimethylalkylamin (C₆-C₂₀)
0 bis 75,0 %, insbesondere 15 bis 25 % Tridemorph,
2,5 bis 50,0 %, insbesondere 10 bis 45 % wasserlösliche Säuren,
5 bis 25,0 %, insbesondere 5 bis 15 % wasserunlösliche Säuren
0 bis 50,0 %, insbesondere 4 bis 30 % Lösungsmittel
wobei die Summe jeweils 100 (Gew.%) ergibt.

Zusätzlich kann Wasser enthalten sein, das z.B. in der handelsüblichen Form der Säuren enthalten ist.

Zusätzlich können eingesetzt werden: Netzmittel, Korrosionsinhibitoren, Farbstoffe und ggf. Bindemittel.

Um die Wirkungsbreite der Holzschutzmittel zu verbessern, können sie auch zusätzlich stickstoffhaltige organische Fungizide enthalten, z.B. weitere Morpholinderivate, wie z.B. Fenpropemorph, Aldimorph; Guanidinderivate, wie z.B. Dodecylguanidin, Chlorhexadin, Guazatin, z.B. Imidazolderivate, z.B. Imazalil, Dodecylimidazol, Glyodin; Pyrimidinderivate, z.B. Hexatidin, quartäre Ammoniumverbindungen, z.B. N-Dodecylpyridiniumchlorid. Außerdem können andere Fungizide zusätzlich verwendet werden, wie z.B. 2-(Thiocyanomethylthio)benzothiazol, 3-Jodo-2-propynylbutylcarbanat, 2-(4-Thiazolyl)benzimidazol, wasserlösliche Salze (z.B. das Kaliumsalz) des N-Cyclohexyldiazeniumdioxids.

Auch andere Fungizide, wie z.B. Furmecyclox oder Benodanil, oder Insektizide, wie Lindan oder Permethrin, können den Formulierungen zugegeben werden, sie sind ggf. unter Zusatz von Emulgatoren, z.B. ethoxilierte Nonylphenole, einzuarbeiten.

Die Anwendung zum Schutz des Holzes kann z.B. je nach Gefährdung des Holzes erfolgen:
a) durch Besprühen des Holzes mit der Lösung
b) durch Tauchen des Holzes in die Lösung
c) durch Tränkung des Holzes mit Hilfe von Druckunterschieden, z.B. Kesseldruck- oder Doppelvakuumtränkung
d) durch Streichen des Holzes.

Bei Holzfolgeprodukten, z.B. Holzschnitt, Zellstoff, sowie weiteren technischen Produkten oder auch Cellulose enthaltenden Materialien, die einem Pilzbefall zugänglich sind, z.B. Zwischenprodukte bei der Papierherstellung, verholzten Einjahrespflanzen (Bagasse, Raps) ist die Applikation den technischen Möglichkeiten anzupassen.

Die Wirksamkeit der Mittel im Bereich des Holzschutzes erstreckt sich beispielsweise auf:
a) Schimmelpilze (z.B. Aspergillus niger)
b) Moderfäulepilze (z.B. Chaetomium globosum)
c) Bläuepilze (z.B. Pullularia pullulans)
d) holzzerstörende Basidiomyceten (z.B. Serpula lacrymans),
insbesondere die Wirkung gegen Bläuepilze ist sehr gut.

Die Holzschutzmittel haben eine sehr gute fungizide Wirkung, wie aus den folgenden Versuchen hervorgeht.

Für die Versuche wurden saftfrische, sägerauhe Kiefernsplinthölzer mit den Abmessungen von 200 x 50 x 15 mm verwendet, die bis zum Versuchsbeginn tiefgefroren waren.

Nach dem Auftauen (ca. 6 Stunden) wurden die Hölzer in die anzuwendenden Lösungen ca. 10 sec getaucht, zum Abtropfen leicht schräg gestellt und nach einer Zwischenlagrung von ca. 24 Stunden unter normalen Klimabedingungen auf dem Testgelände eingebaut. Mit den einzelnen Testlösungen wurden jeweils zehn Musterbretter in der oben beschriebenen Weise imprägniert. Kontrollhölzer ohne Imprägnierung wurden in reines Wasser getaucht.

Als Testgelände wurde eine schattige Weise ausgewählt, deren Rasen vor dem Auslegen der Testhölzer kurzgeschnitten wurde. Die Testhölzer wurden auf zwei Kunststoffschienen in einer Höhe von ca. 1 cm über dem Rasen ausgelegt.

Die der äußeren Bewitterung (Regen) ausgesetzten Testbretter wurden nach zwei Monaten (August/September) geprüft.

Die fungizide Wirksamkeit wurde aufgrund der aufgetretenen Verfärbung und Veränderungen der Holzoberfläche nach vier Kategorien klassifiziert:
- 0: kein Bewuchs
- +: leichter punktueller oberflächlicher Bewuchs
- ++: stärkerer punktueller Bewuchs
- +++: großflächig bis vollflächig bewachsen.

### Vergleichsbeispiel

50,00 % Dimethylalkylamin (C₁₂/C₁₄)
17,50 % Phosphonsäure
22,50 % Propylenglykol

| Anwendungskonzentration | Beschaffenheit der 10 Testhölzer |
|---|---|
| 2,5 % | +++ |
| 5,0 % | +++ |

### Vergleichsbeispiel

50,00 % Tridemorph
30,00 % Phosphonsäure
20,00 % Propylenglykol

| Anwendungskonzentration | Beschaffenheit der 10 Testhölzer |
|---|---|
| 2,5 % | +++ |
| 5,0 % | +++ |

### Beispiel 1 (erfindungsgemäß)

50,00 % Dimethylalkylamin (C₁₂/C₁₄)
10,00 % 2-Ethylhexansäure
15,00 % Phosphonsäure
25,00 % Propylenglykol

| Brett-Nr. | Beschaffenheit der 10 Testhölzer | |
|---|---|---|
| | 2,5 % Anwendungskonzentration | 5 % Anwendungskonzentration |
| 1 | + | 0 |
| 2 | ++ | 0 |
| 3 | + | 0 |
| 4 | ++ | + |
| 5 | 0 | + |
| 6 | 0 | + |
| 7 | + | + |
| 8 | + | ++ |
| 9 | + | 0 |
| 10 | + | 0 |

### Beispiel 2

35,00 % Dimethylalkylamin (C₁₂/C₁₄)
20,00 % Tridemorph
10,00 % Isooctansäure
35,00 % Milchsäure 85 % (15 % Wasser)

| Brett-Nr. | Beschaffenheit der 10 Testhölzer | |
|---|---|---|
| | 2,5 % Anwendungskonzentration | 5 % Anwendungskonzentration |
| 1 | + | + |
| 2 | 0 | + |
| 3 | ++ | + |
| 4 | 0 | 0 |
| 5 | + | 0 |
| 6 | + | + |
| 7 | + | + |
| 8 | + | 0 |
| 9 | + | + |
| 10 | ++ | 0 |

Eine weitere Mischung mit guter fungizider Wirkung ist die folgende Mischung:
35 % Dimethylalkylamin (C₁₂/C₁₄)
20 % Tridemorph
10 % Ethylhexansäure
30 % Phosphonsäure
5 % N-Methylpyrrolidon

## Patentansprüche

1. Holzschutzmittel auf der Grundlage eines Dimethylalkylamins und zweier Säuren, dadurch gekennzeichnet, daß das Holzschutzmittel a) 5 bis 75 % (Gew.Prozent) eines Dimethylalkylamins, b) 2,5 bis 50 % einer wasserlöslichen Säure und c) 5 bis 25 % einer wasserunlöslichen Säure enthält, außer einer Mischung aus Tridemorph, Dimethyl-C₁₂-alkylamin, ethoxyliertes Nonylphenol (9 Ethylenoxid je Phenol), Propylenglykol, Fluoroborsäure, Phosphorsäure, Isooctansäue und Wasser.

2. Holzschutzmittel nach Anspruch 1, dadurch gekennzeichnet, daß es zusätzlich N-Tridecyl-2,6-dimethylmorpholin enthält.

3. Holzschutzmittel nach Anspruch 1, dadurch gekennzeichnet, daß es Phosphonsäure als wasserlösliche Säure enthält.

4. Holzschutzmittel nach Anspruch 1, dadurch gekennzeichnet, daß es 2-Ethyl-hexansäure als wasserunlösliche Säure enthält.

5. Verfahren zum Schutz von Holz, dadurch gekennzeichnet, daß man das Holz mit einem Holzschutzmittel gemäß Anspruch 1 behandelt.

6. Verfahren zur Herstellung eines Holzschutzmittels gemäß Anspruch 1, dadurch gekennzeichnet, daß man a) ein Dimethylalkylamin, b) eine wasserlösliche Säure und c) eine wasserunlösliche Säure miteinander mischt.

## Claims

1. A wood preservative based on a dimethylalkylamine and two acids, wherein the wood preservative contains a) from 5 to 75% by weight of a dimethylalkylamine, b) from 2.5 to 50% of a water-soluble acid and c) from 5 to 25% of a water-insoluble acid, with the exception of a mixture of tridemorph, dimethyl-C₁₂-alkylamine, ethoxylated nonylphenol (9 ethylene oxide per phenol), propylene glycol, fluoboric acid, phosphoric acid, isooctanoic acid and water.

2. A wood preservative as claimed in claim 1, which additionally contains N-tridecyl-2,6-dimethylmorpholine.

3. A wood preservative as claimed in claim 1, which contains phosphonic acid as the water-soluble acid.

4. A wood preservative as claimed in claim 1, which contains 2-ethylhexanoic acid as the water-insoluble acid.

5. A process for preserving wood, wherein the wood is treated with a wood preservative as claimed in claim 1.

6. A process for the preparation of a wood preservative as claimed in claim 1, wherein a) a dimethylalkylamine, b) a water-soluble acid and c) a water-insoluble acid are mixed with one another.

## Revendications

1. Agent de protection du bois à base d'une diméthylalkylamine et de deux acides, caractérisé en ce qu'il contient a) 5 à 75 % en poids d'une diméthylalkylamine b) 2,5 à 50 % d'un acide soluble dans l'eau et c) 5 à 25 % d'un acide insoluble dans l'eau, à l'exception d'un mélange de tridemorphe, diméthyl-(alkyle en C12)-amine, nonylphénol éthoxylé (à 9 mol d'oxyde d'éthylène par mol du phénol), propylène-glycol, acide fluoroborique, acide phosphorique, acide isooctanoïque et eau.

2. Agent de protection du bois selon la revendication 1, caractérisé en ce qu'il contient en outre de la N-tridécyl-2,6-diméthylmorpholine.

3. Agent de protection du bois selon la revendication 1, caractérisé en ce qu'il contient de l'acide phosphonique en tant qu'acide soluble dans l'eau.

4. Agent de protection du bois selon la revendication 1, caractérisé en ce qu'il contient de l'acide 2-éthylhexanoïque en tant qu'acide insoluble dans l'eau.

5. Procédé pour la protection du bois, caractérisé en ce que l'on traite le bois par un agent de protection du bois selon la revendication 1.

6. Procédé de préparation d'un agent de protection du bois selon la revendication 1, caractérisé en ce que l'on mélange entre eux a) une diméthylalkylamine, b) un acide soluble dans l'eau et c) un acide insoluble dans l'eau.
